(19) Europäisches Patentamt / European Patent Office / Office européen des brevets

(11) **EP 4 131 184 A1**

(12) **EUROPEAN PATENT APPLICATION**

(43) Date of publication:
**08.02.2023 Bulletin 2023/06**

(21) Application number: **21189368.0**

(22) Date of filing: **03.08.2021**

(51) International Patent Classification (IPC):
**G06V 40/16** *(2022.01)* **G06V 40/18** *(2022.01)*

(52) Cooperative Patent Classification (CPC):
**G06V 40/165; G06V 40/171; G06V 40/18**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• WANG, Lu
  5656 AE Eindhoven (NL)
• SCHUIJERS, Erik Gosuinus Petrus
  5656 AE Eindhoven (NL)
• NUIJS, Antonius Maarten
  5656 AE Eindhoven (NL)

(74) Representative: **Philips Intellectual Property & Standards**
**High Tech Campus 52**
**5656 AG Eindhoven (NL)**

(54) **ANALYSING SKIN FEATURES**

(57) According to an aspect, there is provided a computer-implemented method (100) for analysing skin features, the method comprising: receiving (102) an image of skin of a subject; detecting (104) a plurality of skin features in the received image; receiving (106) an indication of a level of interaction of the subject with each of the plurality of skin features; determining (108), based on the detected skin features and the received indication of the level of interaction with each skin feature, a severity score for each of the plurality of skin features; and providing (110) the severity scores for presentation to the subject.

100

Fig. 1

**Description**

FIELD OF THE INVENTION

The invention relates to analysing skin features and, more particularly, to determining a score indicative of a severity of a skin feature of a subject.

BACKGROUND OF THE INVENTION

From various studies, it is apparent that a user's perception of features (e.g. skin features or blemishes) of their body may vary greatly from how others perceive those features. For example, a person may be very self-conscious about a pimple on his or her face, while the pimple may be virtually invisible to other people. In general, a person may detect and inspect skin features, such as blemishes, for two main reasons: first, to maintain high personal hygiene levels, for example by identifying and cleaning oily patches of their face, and second, for reassurance of their own image, and considering how they will be perceived by others.

A person may inspect, for example visually or by touch, a feature on their body, either consciously or sub-consciously throughout the day. In some cases, repeated touching of a skin blemish (e.g. a pimple) can prevent healing, or could make the blemish worse. There is, therefore, a desire for a method of assisting a person in evaluating skin features, so that the person has a better understanding of whether a particular feature should be treated or not.

SUMMARY OF THE INVENTION

A person may perceive a feature (e.g. a blemish) on a part of their body, such as their skin, differently to how other people may perceive the feature. For example, a person may feel that a blemish, such as a pimple, appears large and unsightly on their face whereas, in reality, the pimple may be hardly visible to other people. The inventors of the present disclosure have recognised that, by analysing a feature of a person's skin, it is possible to provide an assessment of how relevant a particular skin feature actually is. Embodiments disclosed herein determine a severity score for a skin feature of a person based on the amount that the person interacts with the skin feature, for example by looking at or touching the skin feature. In general, it may be assumed that, the more a person interacts with a skin feature on their body, the more concerned they are likely to be about the skin feature and its appearance to other people. In some embodiments, skin features may also be assessed in terms of how they are likely to be perceived by other people, and this may also be provided to the person, so that the person can understand whether or not their concern about the skin feature is justified.

According to a first specific aspect, there is provided a computer-implemented method for analysing skin features, the method comprising: receiving an image of skin of a subject;
detecting a plurality of skin features in the received image; receiving an indication of a level of interaction of the subject with each of the plurality of skin features; determining, based on the detected skin features and the received indication of the level of interaction with each skin feature, a severity score for each of the plurality of skin features; and providing the severity scores for presentation to the subject.

In some embodiments, the method may further comprise determining, for each of the plurality of skin features, a social perception score using at least one of a mathematical function and a look-up table relating parameters of skin features with a social perception. Determining a severity score for each of the plurality of skin features may be further based on the determined social perception score.

The method may, in some embodiments, further comprise determining, for each of the detected skin features, at least one parameter of the skin feature. Determining the severity score for each skin feature may be further based on the at least one parameter.
The at least one parameter may comprise a parameter selected from a group comprising: a size of the skin feature; a shape of the skin feature; a colour of the skin feature; a skin type of the skin at the location of the skin feature; and a location of the skin feature relative to a reference location.

In some embodiments, the method may further comprise responsive to determining that the at least one parameter of a given skin feature meets a defined threshold condition, generating an instruction signal; and providing the instruction signal for delivery to the subject.

Receiving an indication of a level of interaction of the subject with each of the plurality of skin features comprises receiving an indication of at least one of: a measure of a time spent by the subject looking at a skin feature; and a measure of a time spent by the subject touching a skin feature.

In some embodiments, providing the severity scores for presentation to the subject may comprise generating a representation of the severity scores to be presented with a representation of the subject.

The method may further comprise generating, based on the determined severity score, guidance regarding treatment of one or more of the plurality of skin features; and providing the guidance for presentation to the subject.

According to a second specific aspect, there is provided a computer program product comprising a non-transitory computer-readable medium, the computer-readable medium having computer-readable code embodied therein, the computer-readable code being configured such that, on execution by a suitable computer or processor, the computer or processor is caused to perform steps of the methods disclosed herein.

According to a third specific aspect, there is provided a system for analysing skin features, the system comprising: an image receipt unit for receiving an image of skin of a subject; a display unit; and a processing unit configured to: receive, via the image receipt unit, an image of skin of a subject; detect a plurality of skin features in the received image; receive an indication of a level of interaction of the subject with each of the plurality of skin features; determine, based on the detected skin features and the received indication of the level of interaction with each skin feature, a severity score for each of the plurality of skin features; and provide the severity scores for presentation to the subject via the display unit.

In some embodiments, the image receipt unit comprises an image capture unit configured to capture at least one of: the image of skin of the subject; and an image indicative of the level of interaction of the subject with each of the plurality of skin features.

The system may further comprise a user interface configured to receive a user input from the subject, the user input comprising at least one of: the image of skin of the subject; an indication of one or more of the plurality of skin features in the received image; an indication of the subject's perceived severity of one or more of the plurality of skin features.

The display unit may be configured to display the severity scores of the plurality of skin features on a representation of the skin of the subject.

In some embodiments, the system may further comprise a storage device configured to store a look-up table relating parameters of skin features with a social perception. The processing unit may be configured to determine, based on a consultation of the look-up table in the storage device, a social perception score for each of the plurality of skin features.

The processing unit may, in some embodiments, be configured to determine, for each of the detected skin features, at least one parameter of the skin feature; and determine the severity score for each skin feature further based on the at least one parameter.

These and other aspects will be apparent from and elucidated with reference to the embodiment(s) described hereinafter.

BRIEF DESCRIPTION OF THE DRAWINGS

Exemplary embodiments will now be described, by way of example only, with reference to the following drawings, in which:

Fig. 1 is a flowchart of an example of a method for analysing skin features;
Fig. 2 is an illustration of an example of a head of a subject with various skin features indicators shown;
Fig. 3 is a flowchart of a further example of a method for analysing skin features;
Fig. 4 is a schematic illustration of an example of a computer-readable medium in communication with a processor;
Fig. 5 is a schematic illustration of an example of a system for analysing skin features; and
Fig. 6 is a schematic illustration of a further example of a system for analysing skin features.

DETAILED DESCRIPTION OF THE EMBODIMENTS

Embodiments disclosed herein provide a mechanism by which skin features of a subject (e.g. a person) are detected and analysed, so that the subject can understand whether the way they perceive the skin features is justified (e.g. in line with the way other people perceive the skin features). For example, a person who has a blemish (e.g. a pimple) on their face may feel particularly self-conscious about the blemish, and may think that the blemish stands out and is highly visible to other people. As such, the person may repeatedly look at the blemish in a mirror or using a device capable of imaging, such as a smart phone, and may repeatedly touch, pick or scratch the blemish in an attempt to reduce its size or disguise it. By detecting the amount that the person interacts with the blemish, it is possible to determine a score of how severe the person considers the blemish to be. A score for each of the person's skin features may be provided to the person so that they can understand the extent to which they interact with each skin feature. Furthermore, in some embodiments a social perception score may be determined for each skin feature, based on previously-gathered evidence, that can be used to provide an insight as to how each skin feature is likely to be judged by other people. This may be combined with the severity score to provide an overall ranking of the skin features in terms of the need to provide treatment to the skin features.

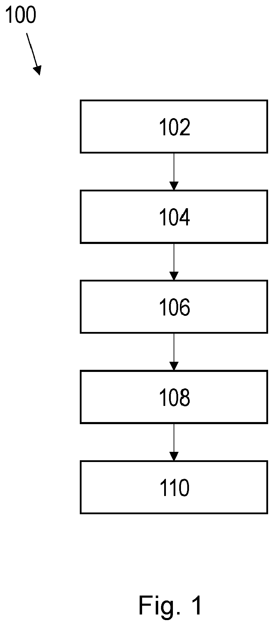

According to a first aspect, the invention relates to a method. Referring now to the drawings, Fig. 1 is a flowchart of an example of a method 100. The method 100, which may comprise a computer-implemented method, may be a method for analysing skin features. As such, steps of the method 100 may be performed using one or more processors, such as processors of a computing device. The method 100 comprises, at step 102, receiving an image of skin of a subject. The image may be a photograph captured previously using an imaging device, such as a camera, or a camera unit in a smart phone or an interactive mirror. Alternatively, the image may be captured in real-time by such a device. In some embodiments, the image may be obtained from a storage device (e.g. a memory), or received via an upload, for example. The image, which may comprise a two-dimensional or three-dimensional image, may include any region of skin of at least part of the subject. For example, the image may comprise a portrait photo of the subject's face.

At step 104, the method 100 comprises detecting a plurality of skin features in the received image. The skin feature detection may be performed using a feature detection unit or module. As used herein, the expression "skin features" is intended to refer to any feature of the skin of the subject, such as, but not limited to, a blemish, a discolouration, a spot, a pimple, a wrinkle, a region of scar tissue, a rash, an inflamed region, a wound (e.g. a cut), or the like. In general, the expression "skin feature" may, for example, be intended to refer to a feature of the subject's skin that may be perceived by the subject or by others in a negative way. Detection of the plurality of skin features may be achieved using one or more known image processing techniques, for example by detecting image features in the image that correspond to particular skin features. For example, a particular colour contrast between adjacent pixels in the image may be characteristic of an edge of a pimple. In some examples, a trained machine learning model may be used to detect the skin features. In other examples, detection of the skin features in the image may be achieved with assistance from a user, such as the subject. For example, the subject may indicate on the image (e.g. on an image displayed on a display screen of a computing device) the location of any particular skin features of concern.

The method 100 comprises, at step 106, receiving an indication of a level of interaction of the subject with each of the plurality of skin features. Thus, for each skin feature detected during step 104, step 106 involves obtaining a measure of an amount that the subject interacts with the skin feature. In some embodiments, an indication of a level of interaction of the subject with a skin feature may be received via a user input, for example from the subject. Thus, in one example, the subject may provide an input, via a user interface, indicating a level of concern the subject has regarding a particular skin feature. In other embodiments, however, the indication of the level of interaction may be detected using suitable detection techniques. Inspection of a skin feature may be considered to include looking at or visually inspecting the skin feature or touching their skin feature with a finger, an implement or the like. For detecting a visual inspection, an eye tracking or eye-gaze tracking mechanism may be used to track the eyes of the eye gaze of the subject when viewing their reflection in a mirror or when viewing a digital representation or image of themselves, for example using a smart phone or tablet computer. Such a tracking system may measure an amount of time that the subject spends looking at or inspecting each skin feature in their reflection or in the digital representation or image. The level of interaction may correspond to the amount of time spent inspecting each skin feature, for example. Detecting a physical inspection (e.g. touching the skin feature), an imaging device such as a camera may be used to detect when the subject's finger or some other implement or device is used to touch a skin feature. As with the eye-gaze tracking system, the level of interaction may correspond to the amount of time spent touching each skin feature. The level of physical interaction with each skin feature may be particularly relevant to determining the severity or importance of a skin feature to the subject because many people tend to touch skin features on their face subconsciously (e.g. a mindless touch, without any purpose).

Thus, receiving an indication of a level of interaction of the subject with each of the plurality of skin features comprises receiving an indication of at least one of: a measure of a time spent by the subject looking at a skin feature; and a measure of a time spent by the subject touching a skin feature.

At step 108, the method 100 comprises determining, based on the detected skin features and the received indication of the level of interaction with each skin feature, a severity score for each of the plurality of skin features. In a general sense, a severity score may be considered to be a score indicating how severe or important a skin feature is, or is considered to be. The severity of a skin feature may vary as a function of the level of interaction of the subject with the skin feature; for example, the severity score for a skin feature may increase with the amount or level of interaction. Similarly, the severity of a skin feature may vary depending on the nature of the skin feature; for example, the severity score for a pimple may be higher than the severity score for a wrinkle. Determining the severity score, at step 108, may involve combining the nature of the skin feature and the level of interaction with the skin feature.

In some embodiments, the step of detecting (step 104) the plurality of skin features in the received image includes detecting the location of each skin feature on the subject. For example, the location of a skin feature on a person's face may be apparent or derivable from the received image. The severity score for a skin feature may vary based on the location of the skin feature; for example, a pimple in a prominent position on the subject's forehead may have a higher severity score than a pimple that is hidden by the subject's hair or hairline.

At step 110, the method 100 comprises providing the severity scores for presentation to the subject. The severity scores may, for example, be presented on a display screen (e.g. a display of a smart phone or interactive mirror). In some embodiments, the severity scores may be presented in the form of a list, a table, a matrix, or the like while, in other embodiments, the severity scores may be presented graphically, in the form of an image. In some embodiments, providing the severity scores for presentation to the subject may comprise generating a representation of the severity scores to be presented with a representation of the subject. For example, a representation (e.g. a coloured circle) may be presented (e.g. superimposed or overlaid) along with an image of the subject in which the detected skin features are visible. In one example, skin features having the highest severity score may be surrounded by a red circle, skin features having an average (e.g. medium level) severity score may be surrounded by a yellow circle and skin features having the lowest severity score may be surrounded by a green circle. Other colours, shapes or representations may alternatively be used. In this way, the subject is able to visualise the severity of each skin feature easily.

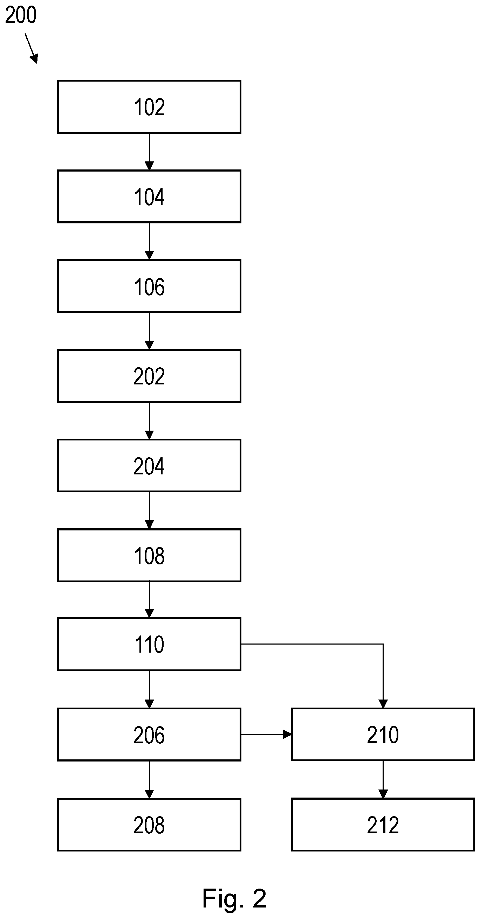

Fig. 2 is a flowchart of a further example of a method 200, which may also comprise a computer-implemented method for analysing skin features. The method 200 comprises steps of the method 100 discussed above. The method 200 may further comprise, at step 202, determining, for each of the plurality of skin features, a social perception score using at least one of a mathematical function and a look-up table relating parameters of skin features with a social perception. The social perception associated with a skin feature is an indication of how the skin feature might be perceived by others, for example an individual or a group of people. For example, a blemish that the subject finds unsightly might not be particularly visible to other people. In examples disclosed herein, a social perception score may be allocated or determined on a reverse scale between 1 and 3, where a social perception score of 1 represents a skin feature that is very probably noticeable to others and a social perception score of 3 represents a skin feature that is unlikely to be noticeable to others.

In some embodiments, the social perception score for a skin feature may be determined by consulting a look-up table which provides, for a range of skin features, a score indicating how each skin feature may be perceived by the public. The scores in the look-up table may take into account factors such as the location of the skin feature on the subject's body, the size of the skin feature, the colour of the skin feature, and so on. The look-up table may be populated by social perception scores provided through questionnaires or other research.

In other embodiments, the social perception score for a skin feature may be determined using a mathematical function. Such a mathematical function may, for example, take into account an appearance of each skin feature in the image, including factors such as size, location, colour, and the like. The mathematical function may also take into account other factors, such as a number of skin features visible in the image (e.g. a particular skin feature may have a lower social perception score if it is surrounded by other skin features or blemishes than if it is the only skin feature visible on a subject's face).

In examples where the size of the skin feature is determined, the size may be determined in terms of a number of pixels covered by the skin feature or in terms of the physical size (e.g. in millimetres or centimetres) of the skin feature. In such examples, a measurement of the size of the part of the subject that has been imaged (e.g. the face) may also be taken in terms of a number of pixels. If an actual width and height of the imaged body part (e.g. the face) is available, then a pixel-to-centimetre or pixel-to-millimetre ratio may be calculated and used to determine an absolute size of each skin feature. The step of determining a severity score for each of the plurality of skin features (step 108) may be further based on the determined social perception score. Thus, the severity score may be determined based on the detected skin features, the received indication of the level of interaction with each skin feature, and/or the determined social perception score.

In some examples, the severity score for a skin feature may be calculated by combining the social perception score and the level of interaction for the skin feature. Once the severity scores have been determined for all of the skin features, a ranking of the skin features may be determined based on the severity scores. The ranking may be presented to the subject along with the severity scores. In other examples, a ranking of a skin feature may be determined using a mathematical function such as:

$$R = a \times (1 - I) + b \times (3 - SP)$$

where $R$ is the importance/severity rank of the skin feature, $I$ is the level of interaction (e.g. 0 if the skin feature has not been inspected/interacted with by the subject; 1 if the skin feature has been inspected/interacted with by the subject), $SP$ is the social perception score of the skin feature, and $a$ and $b$ are weights for $I$ and $SP$ respectively.

Table 1 below shows example scores for three skin features.

Table 1

| Skin feature number | Detected skin feature type | Face area | Social perception score | Level of interaction (1-inspected/0-not inspected) | Final rank |
|---|---|---|---|---|---|
| 1 | Papule (a type of pimple) | 1 (forehead) | 2 (probably noticeable) | 0 | 2 |
| 2 | White head | 5 (under the nose) | 3 (unlikely to be noticeable) | 0 | 3 |
| 3 | Inflammation | 4 (left cheek) | 1 (very probably noticeable) | 1 | 1 |

In the example shown in Table 1, the social perception score may take into account the location (e.g. face area) of the skin feature and/or the detected skin feature type. The severity score, and thus the final ranking, may be determined or calculated using a predetermined scoring mechanism. In one example, a mapping matrix may be used to determine a severity score based on the social perception score and the level of interaction. In another example, a mapping matrix may be used to determine a ranking of the skin features. An example of such a ranking mapping matrix is shown below in Table 2. In this example, a skin feature that is more likely to be noticeable to others is given a social perception score of 1, while a skin feature that is less likely to be noticeable to others is given a social perception score of 3. The resulting ranking for the skin features represents the overall ranking of importance of the skin features, as shown in the 'Final Rank' column in Table 1 above.

| | | Social perception score | | |
|---|---|---|---|---|
| | | *1* | *2* | *3* |
| *Level of interaction* | *1* | **1** | **1** | **2** |
| | *0* | **1** | **2** | **3** |

Table 2

Thus, a skin feature having a social perception score of 3 and a level of interaction of 1 will be given a ranking of 2, while a skin feature having the same social perception score of 3, with which the subject has not interacted (i.e. the level of interaction is 0) will be given a lower ranking of 3. In other examples, other severity scores and ranks may be defined for different social perception scores and levels of interaction. A separate mapping matrix may be used for each different area of skin of the subject. For example, a first mapping matrix may be used for skin features detected on a cheek of the subject while a second, different mapping matrix may be used for skin features detected on a forehead of the subject. This takes account of the different ways in which people perceive skin features on different parts of the body.

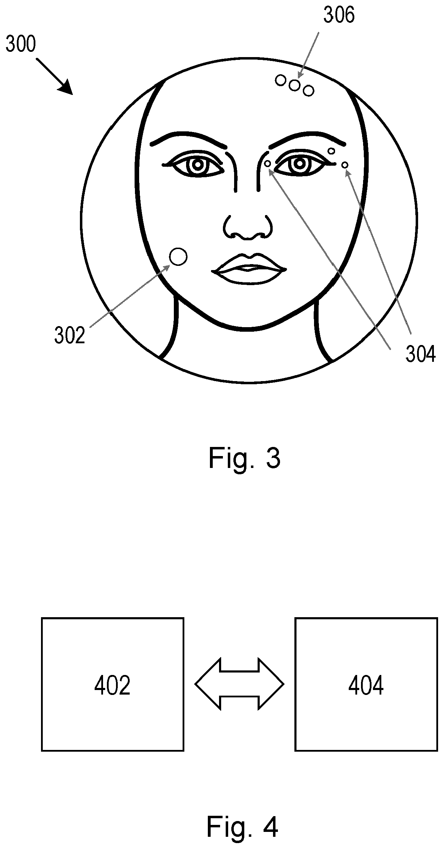

Fig. 3 is an illustration of an example of a representation 300 of a subject with circles displayed around various skin features. For clarity, the skin features are not shown in Fig. 3. In this example, a red circle 302 surrounds a skin feature that has been potentially overlooked by the subject (i.e. the level of interaction is 0), but which is in a prominent position on the subject's face (i.e. the social perception score is 1), green circles 304 surround skin features which have been inspected by the subject (i.e. the level of interaction is 1), and which are considered to be in prominent positions on the subject's face (i.e. the social perception score is 1), and grey circles 306 surround skin features which are considered to be in areas that are unlikely to be visible to others (i.e. the social perception score is 3). In this way, the lower-ranked skin features are indicated by grey circles, while the higher-ranked skin features are indicated by red or green circles. The skin feature indicated by the red circle may be considered to be the most important skin feature since it is possible from the low level of interaction that it has been overlooked by the subject. It may be considered that this skin feature should or could be treated, and therefore some attention should be given to the skin feature.
With reference again to Fig. 2, the method 200 may further comprise, at step 204, determining, for each of the detected skin features, at least one parameter of the skin feature. A skin feature parameter determined at step 204 may comprise a parameter that can be determined or measured from the received image. In some examples, the at least one parameter may comprise a parameter selected from a group comprising: a size of the skin feature; a shape of the skin feature; a colour of the skin feature; a skin type of the skin at the location of the skin feature; and a location of the skin feature relative to a reference location. The size of the skin feature may be measured in terms of pixels and/or absolute measurements, such as millimetres or centimetres. The shape and/or colour of the skin feature may be indicative of the type of skin feature. A parameter indicating a skin type of the skin at the location of the skin feature may also help in identification of the skin feature to be made. For example, an indication of the skin type may comprise an indication that the skin is dry or oily. In some examples, the Fitzpatrick classification system may be used for classifying the skin type. The location of the skin feature relative to a reference location may be used for determining the location of the skin feature has indicated in Table 1 above. The location may be determined relative to a fixed point in the image or relative to another skin feature or a landmark feature of the subject, such as the subject's nose, eye or mouth. In other examples, the location may be determined relative to a fixed reference point in the image, such as the corner of the image.

In examples where at least one parameter of the skin feature is determined, the step of determining the severity score for each skin feature (step 108) may be further based on the at least one parameter.

In some examples, one or more trained machine learning models may be used to analyse the received image, detect the plurality of skin features, and determine a severity score for the plurality of skin features. In some examples, one or more trained machine learning models may be used to determine a social perception score for each skin feature.

At step 206, the method 200 may further comprise, responsive to determining that the at least one parameter of a given skin feature meets a defined threshold condition, generating an instruction signal. Step 206 may enable an automatic instruction or alert to be delivered to the subject or to some other recipient in the event that the measured parameter warrants a notification to be provided to the subject. The method 200 may further comprise, at step 208, providing the instruction signal for delivery to the subject. The instruction signal may, for example, comprise an instruction regarding future or ongoing treatment of the skin feature, such as an instruction to "apply ointment to the skin feature daily", "try to refrain from touching the pimple", or "this pimple is unlikely to be seen by others, so try not to worry about it". In some examples, the instruction signal may be generated if it is determined that the skin feature should receive medical attention, for example if a parameter of the skin feature is such that the skin feature could be a cancerous lesion, for example.

In some examples, the instruction signal may comprise guidance regarding treatment of the skin feature. Such guidance may additionally or alternatively be provided based on the severity score. Thus, the method 200 may, in some embodiments, further comprise, at step 210, generating, based on the determined severity score, guidance regarding treatment of one or more of the plurality of skin features. Such guidance may, for example, comprise instructions or advice regarding how one or more of the skin features should or could be treated more effectively, and may include guidance relating to the use of one or more treatment devices or personal care devices. At step 212, the method 200 may comprise providing the guidance for presentation to the subject. The guidance may be provided to the subject via a user interface, such as a display screen of a smart phone or an interactive mirror or via some other presentation device, such as a speaker.

According to a second aspect, the invention relates to a computer program product. Fig. 4 is a schematic illustration of an example of a processor 402 the communication with a computer-readable medium 404. The computer program product comprises a non-transitory computer-readable medium 404, the computer-readable medium having computer-readable code embodied therein, the computer-readable code being configured such that, on execution by a suitable computer or processor 402, the computer or processor is caused to perform steps of the methods disclosed herein. The processor 402 may, for example, comprise a processing unit of a device, such as a smart phone, a tablet computer, a laptop computer, a wearable device, an interactive mirror, or the like. In some examples, the processor 402 may comprise a processing resource located remotely from the computer readable medium 404, for example forming part of a server and/or in a cloud-computing environment.

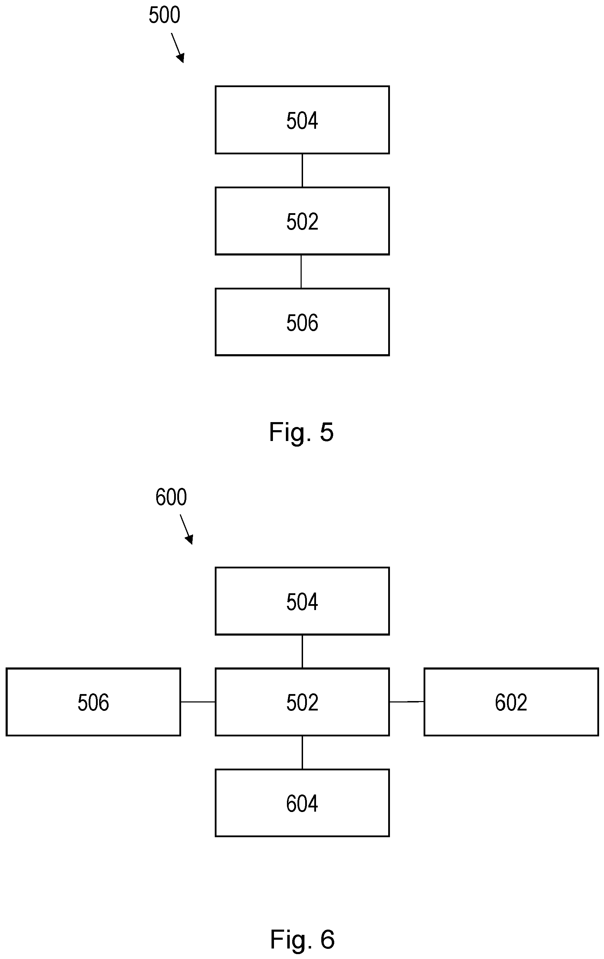

According to a third aspect, the invention relates to a system. Fig. 5 is a schematic illustration of an example of a system 500, which may be referred to as a system for analysing skin features. The system 500 comprises a processing unit 502, an image receipt unit 504 and a display unit 506. The image receipt unit 504 is for receiving an image of skin of a subject. The display unit 506 may comprise a display unit of a device, such as a smart phone or an interactive mirror, and may be configured to display information to the subject, such as images and other data. The processing unit 502 is in communication with the image receipt unit 504 and the display unit 506 and is configured to perform functions corresponding to the steps of the methods 100, 200 disclosed herein. Specifically, the processing unit 502 is configured to receive, via the image receipt unit 504, an image of skin of a subject; detect a plurality of skin features in the received image; receive an indication of a level of interaction of the subject with each of the plurality of skin features; determine, based on the detected skin features and the received indication of the level of interaction with each skin feature, a severity score for each of the plurality of skin features; and provide the severity scores for presentation to the subject via the display unit 506.

In some embodiments, the image receipt unit 504 may comprise, or may be connected to, an image capture unit configured to capture at least one of: the image of skin of the subject; and an image indicative of the level of interaction of the subject with each of the plurality of skin features. Such an image capture unit, such as a camera, may be configured to capture a single image or multiple images (e.g. a series of images or video footage) of skin of the subject. In some embodiments, the image capture unit may capture an initial image of the subject at the start of a personal care activity, for example, and the initial image may be used for detecting the plurality of skin features. The image capture unit may also capture an image, or multiple images, indicative of the level of interaction of the subject with each of the plurality of skin features, and this image or set of images may be used to determine the amount that the subject inspects or attracts with each skin feature. For example, the image or set of images may be used to detect when a subject is looking at a particular skin feature (e.g. using eye-gaze monitoring techniques) or when the subject is touching a skin feature.

The display unit 506 may, in some embodiments, be configured to display the severity scores of the plurality of skin features on a representation of the skin of the subject. The display unit 506 may additionally or alternatively display the determined ranking of the skin features to the subject. For example, the display unit 506 may provide a representation of the skin of the subject (e.g. an image of the subject's face) with indicators (e.g. circles) superimposed or overlaid on the representation, showing the determined severity of each skin feature. For example, a representation similar to the representation 300 may be displayed on the display unit 506.

Fig. 6 is a schematic illustration of a further example of a system 600, such as a system for analysing skin features. The system 600 comprises features of the system 500 discussed above. The system 600 may, in some embodiments, further comprise a user interface 602 configured to receive a user input from the subject, the user input comprising at least one of: the image of skin of the subject; an indication of one or more of the plurality of skin features in the received image; an indication of the subject's perceived severity of one or more of the plurality of skin features. Thus, in some examples, the subject may provide (e.g. upload) an image of their skin (e.g. a photograph of themselves) via the user interface 602. The user interface 602 may enable the subject to indicate, on an image, the locations of one or more skin features, for example by touching points on the image where the subject believes a skin feature (e.g. a blemish such as a pimple) is present. The subject's user input may be used to aid the detection of skin features in the image. For example, the user input may be used to confirm one or more suspected candidate skin features detected by the processor 502. The user interface 602 may enable the subject to provide an indication of how severe they consider a skin feature to be. For example, the subject may indicate on a scale of 1 to 3 how important or relevant a particular skin feature is to them (e.g. how severe the subject perceives the skin feature to be).

In some embodiments, the system 600 may further comprise a storage device 604 configured to store a look-up table relating parameters of skin features with a social perception. The storage device 604 may be in communication with the processor 502 and/or with other components of the system 500, 600. In some embodiments, data, such as the associations between parameters of the skin features and social perceptions may be stored in a database format. The processing unit 502 may be configured to determine, based on a consultation of the look-up table in the storage device 604, a social perception score for each of the plurality of skin features. For example, if a measurement of the size of a skin feature is available, the look-up table may be consulted, and a social perception score for a skin feature of the measured size may be determined. The look-up table may include associations between social perception scores and skin feature parameters including any parameters, such as those disclosed herein.

The processing unit 502 may, in some embodiments, be configured to determine, for each of the detected skin features, at least one parameter of the skin feature. As discussed above, any skin feature parameter may be determined, such as those discussed herein. Such parameters may include size, colour, shape, and the like. The processing unit 502 may be configured to determine the severity score for each skin feature further based on the at least one parameter.

In other examples, the processor 502 may be configured to perform other steps of the methods 100, 200 disclosed herein.

Embodiments of the present disclosure provide a mechanism by which a subject can gain a deeper understanding of how features of their skin might be perceived by others. Moreover, the disclosed embodiments provide the subject with a score for each skin feature indicating the severity of the skin feature based on how the subject perceives the skin feature (i.e. based on the level of interaction with skin feature). A social perception score may also be determined for each skin feature, and used when calculating the severity score. By providing details of the severity of each skin feature to the subject, the subject can better understand whether a skin feature such as a pimple or spot on their skin, that they may consider to be unsightly, is actually likely to be visible to other people. With this knowledge, the subject may not only worry less about skin features that are not socially perceivable, but may apply treatment to those skin features in a more appropriate manner. For example, a subject who may have been over-treating a particular skin feature, and causing damage to the skin, may learn that further treatment is not needed, which could reduce the likelihood of damaging the skin.

The processor 402, 502 can comprise one or more processors, processing units, multicore processors or modules that are configured or programmed to control the system 500, 600 in the manner described herein. In particular implementations, the processor 402, 502 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method (100) for analysing skin features, the method comprising:

    receiving (102) an image of skin of a subject;
    detecting (104) a plurality of skin features in the received image;
    receiving (106) an indication of a level of interaction of the subject with each of the plurality of skin features;
    determining (108), based on the detected skin features and the received indication of the level of interaction with each skin feature, a severity score for each of the plurality of skin features; and
    providing (110) the severity scores for presentation to the subject.

2. A computer-implemented method (100, 200) according to claim 1, further comprising:

    determining (202), for each of the plurality of skin features, a social perception score using at least one of a mathematical function and a look-up table relating parameters of skin features with a social perception;
    wherein determining a severity score for each of the plurality of skin features is further based on the determined social perception score.

3. A computer-implemented method (100, 200) according to claim 1 or claim 2, further comprising:

    determining (204), for each of the detected skin features, at least one parameter of the skin feature;
    wherein determining the severity score for each skin feature is further based on the at least one parameter.

4. A computer-implemented method (100, 200) according to claim 3, wherein the at least one parameter comprises a parameter selected from a group comprising: a size of the skin feature; a shape of the skin feature; a colour of the skin feature; a skin type of the skin at the location of the skin feature; and a location of the skin feature relative to a reference location.

5. A computer-implemented method (100, 200) according to claim 3 or claim 4, further comprising:

   responsive (206) to determining that the at least one parameter of a given skin feature meets a defined threshold condition, generating an instruction signal; and
   providing (208) the instruction signal for delivery to the subject.

6. A computer-implemented method (100, 200) according to any of the preceding claims, wherein receiving an indication of a level of interaction of the subject with each of the plurality of skin features comprises receiving an indication of at least one of: a measure of a time spent by the subject looking at a skin feature; and a measure of a time spent by the subject touching a skin feature.

7. A computer-implemented method (100, 200) according to any of the preceding claims, wherein providing the severity scores for presentation to the subject comprises generating a representation of the severity scores to be presented with a representation of the subject.

8. A computer-implemented method (100, 200) according to any of the preceding claims, further comprising:

   generating (210), based on the determined severity score, guidance regarding treatment of one or more of the plurality of skin features; and
   providing (212) the guidance for presentation to the subject.

9. A computer program product comprising a non-transitory computer-readable medium (404), the computer-readable medium having computer-readable code embodied therein, the computer-readable code being configured such that, on execution by a suitable computer or processor, the computer or processor (402) is caused to perform the method of any of the preceding claims.

10. A system (500) for analysing skin features, the system comprising:

   an image receipt unit (504) for receiving an image of skin of a subject;
   a display unit (506); and
   a processing unit (502) configured to:

      receive, via the image receipt unit, an image of skin of a subject;
      detect a plurality of skin features in the received image;
      receive an indication of a level of interaction of the subject with each of the plurality of skin features;
      determine, based on the detected skin features and the received indication of the level of interaction with each skin feature, a severity score for each of the plurality of skin features; and
      provide the severity scores for presentation to the subject via the display unit.

11. A system (500, 600) according to claim 10, wherein the image receipt unit comprises an image capture unit configured to capture at least one of: the image of skin of the subject; and an image indicative of the level of interaction of the subject with each of the plurality of skin features.

12. A system (500, 600) according to claim 10 or claim 11, further comprising:

   a user interface (602) configured to receive a user input from the subject, the user input comprising at least one of: the image of skin of the subject; an indication of one or more of the plurality of skin features in the received image; an indication of the subject's perceived severity of one or more of the plurality of skin features.

13. A system (500, 600) according to any of claims 10 to 12, wherein the display unit is configured to display the severity scores of the plurality of skin features on a representation of the skin of the subject.

14. A system (500, 600) according to any of claims 10 to 13, further comprising:

a storage device (604) configured to store a look-up table relating parameters of skin features with a social perception;

wherein the processing unit (502) is configured to:

determine, based on a consultation of the look-up table in the storage device, a social perception score for each of the plurality of skin features.

15. A system (500, 600) according to any of claims 10 to 14, wherein the processing unit (502) is configured to:

determine, for each of the detected skin features, at least one parameter of the skin feature; and
determine the severity score for each skin feature further based on the at least one parameter.

100

```
┌─────────────────────┐
│         102         │
└─────────────────────┘
           │
           ▼
┌─────────────────────┐
│         104         │
└─────────────────────┘
           │
           ▼
┌─────────────────────┐
│         106         │
└─────────────────────┘
           │
           ▼
┌─────────────────────┐
│         108         │
└─────────────────────┘
           │
           ▼
┌─────────────────────┐
│         110         │
└─────────────────────┘
```

Fig. 1

200

Fig. 2

Fig. 3

Fig. 4

500

504

502

506

Fig. 5

600

504

506

502

602

604

Fig. 6

Europäisches
Patentamt

European
Patent Office

Office européen
des brevets

# EUROPEAN SEARCH REPORT

Application Number

EP 21 18 9368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 651 040 A (HUAWEI TECHNOLOGIES CO LTD) 11 September 2020 (2020-09-11) * figures 5,9-10 * * paragraph [0154] - paragraph [0219] * ----- | 1-15 | INV. G06V40/16 G06V40/18 |
| A | US 2018/039734 A1 (JARLMAN OLOF [SE] ET AL) 8 February 2018 (2018-02-08) * paragraph [0084] - paragraph [0085] * ----- | 2,14 | |

TECHNICAL FIELDS
SEARCHED      (IPC)

G06V

The present search report has been drawn up for all claims

| Place of search | Date of completion of the search | Examiner |
|---|---|---|
| The Hague | 31 January 2022 | Chehade, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 9368

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2022

| Patent document cited in search report | | Publication date | Patent family member(s) | | Publication date |
|---|---|---|---|---|---|
| CN 111651040 | A | 11-09-2020 | CN | 111651040 A | 11-09-2020 |
| | | | WO | 2021238995 A1 | 02-12-2021 |
| US 2018039734 | A1 | 08-02-2018 | EP | 3265990 A1 | 10-01-2018 |
| | | | US | 2018039734 A1 | 08-02-2018 |
| | | | WO | 2016144239 A1 | 15-09-2016 |

EPO FORM P0459

For more details about this annex : see Official Journal of the European Patent Office, No. 12/82